# EUROPEAN PATENT APPLICATION

(11) **EP 2 858 223 A1**
(43) Date of publication of application: **08.04.2015**
(21) Application number: 13797573.6
(22) Date of filing: 27.05.2013
(51) Int. Cl.: H02M 3/155, B60R 16/03, F02D 29/02, H02J 7/00

(54) **POWER SUPPLY CIRCUIT FOR VEHICLE**

(30) Priority: 28.05.2012 JP 2012120798
(71) Applicant: KABUSHIKI KAISHA TOYOTA JIDOSHOKKI, Kariya-shi, Aichi 448-8671 (JP)
(72) Inventor: SAKAKIBARA, Norihisa, Kariya-shi Aichi 448-8671 (JP)
(74) Representative: TBK
(86) International application number: PCT/JP2013/064591
(87) International publication number: WO 2013/180050

(57) **Abstract**

A power-supply circuit 1 includes a booster circuit 4, a bypass switch 15, and a controlling circuit 13. The controlling circuit 13 controls the driving of a boosting switching element 6 in a manner such that, at a predetermined timing during an ordinary period, the bypass switch 15 is put and maintained in the off state and then such that an output voltage of the booster circuit 4 becomes equal to an input voltage of the booster circuit 4 before the predetermined timing. While the controlling circuit 13 is controlling the driving of the boosting switching element 6 in a manner such that the output voltage of the booster circuit 4 becomes equal to the input voltage of the booster circuit 4 before the predetermined timing, the controlling circuit 13 detects, as a bypass current flowing through the bypass switch 15, a current detected by a current detecting circuit 14.

## Description

### FIELD

The present invention relates to a vehicular power-supply circuit that maintains a constant voltage of a battery and outputs the voltage to a load.

### BACKGROUND

In recent years, idle-stop vehicles have been put into practical use for the purpose of decreasing fuel consumption and waste gas. An idle-stop vehicle is configured to automatically stop an engine in response to detection of a stopping operation of the vehicle when, for example, waiting at a stoplight (idle stop), and to automatically restart the engine in response to detection of a start operation of the vehicle.

In such an idle-stop vehicle, in restarting an engine subsequently to an idle stop, a heavy current flow through a starter motor for starting the engine, thereby temporarily decreasing the voltage of a battery. This also temporarily decreases voltages supplied to loads such as electronic devices connected to the battery other than the starter motor. Accordingly, depending on a load, a supplied voltage may deviate from the range of voltages needed for operations, thereby temporarily disabling the load from being operated normally. Operations may be performed against the driver's intentions, e.g., a car navigation system or an audio system may be reset, or an audio system may cause a skip in sound.

In view of the situations above, such an idle-stop vehicle includes a power-supply circuit between a battery and a load so that the supplying of a necessary voltage to the load can be maintained even when the voltage of the battery temporarily decreases.

An existing power-supply circuit is configured in a manner such that, in restarting an engine subsequently to an idle stop, a voltage of a battery boosted by operating a booster circuit is output to a load, and, during an ordinary period other than the time of restarting the engine, a bypass switch connected in parallel to the booster circuit is maintained in an on state so as to output the voltage of the battery to the load via the bypass switch (see, for example, patent document 1).

Accordingly, even when the voltage of the battery temporarily decreases due to the restarting of the engine subsequent to an idle stop, the supplying of necessary power to the load can be maintained. During an ordinary period other than the time of restarting the engine subsequently to an idle stop, the voltage of the battery is output to the load without being decreased by an element within the booster circuit, so that the supplying of necessary power to the load can be maintained.

### PRIOR ART DOCUMENT

### PATENT DOCUMENT

Patent document 1: Japanese Laid-open Patent Publication No. 2010-183755

### SUMMARY

### PROBLEMS TO BE SOLVED BY THE INVENTION

However, in the case of the power-supply circuit above, while a large current that is equal to or greater than a specific threshold is flowing through an output of a booster circuit due to an increase in power supplied to a load, when an engine is restarted subsequently to an idle stop, the booster circuit may possibly be operated beyond its capability. In such a case, the booster circuit may stop during the restarting of the engine because of, for example, an overcurrent protection function, and the load may be reset or temporarily stopped.

Accordingly, an object of the present invention is to prevent an overcurrent from flowing through a booster circuit during a boosting operation performed by the booster circuit in a vehicular power-supply circuit that continuously outputs a stable voltage to a load equipped in an idle-stop vehicle.

### MEANS FOR SOLVING THE PROBLEMS

A vehicular power-supply circuit of the invention includes: a booster circuit that includes a boosting switching element, a coil provided between a battery and the boosting switching element, and a current detecting circuit that detects a current flowing through the boosting switching element; a bypass switch connected in parallel to the booster circuit; and a controlling circuit that controls the driving of the boosting switching element in such a manner as to maintain the bypass switch in an on state during an ordinary period other than the time of restarting the engine subsequently to an idle stop, and in such a manner as to, at the time of restarting the engine subsequently to the idle stop, maintain the bypass switch in an off state and boost and output a voltage of the battery to a load. The controlling circuit controls the driving of the boosting switching element in a manner such that, at a predetermined timing during the ordinary period, the bypass switch is put and maintained in the off state, and then such that an output voltage of the booster circuit becomes equal to an input voltage of the booster circuit before the predetermined timing. While the controlling circuit is controlling the driving of the boosting switching element in a manner such that the output voltage of the booster circuit becomes equal to the input voltage of the booster circuit before the predetermined timing, the controlling circuit detects, as a bypass current flowing through the bypass switch, a current detected by the current detecting circuit.

Accordingly, the idle stop can be prohibited when, for example, the bypass current is equal to or greater than a threshold, and hence, while a large current that is equal to or greater than a threshold is flowing through an output of the booster circuit due to an increase in power supplied to the load, the booster circuit can be prevented from being operated in response to the restarting of an engine subsequent to the idle stop. This allows an overcurrent to be prevented from flowing through the booster circuit during a boosting operation performed by the booster circuit.

### EFFECT OF THE INVENTION

According to the present invention, an overcurrent can be prevented from flowing through a booster circuit during a boosting operation performed by the booster circuit in a vehicular power-supply circuit that continuously outputs a stable voltage to a load equipped in an idle-stop vehicle.

### BRIEF DESCRIPTION OF THE DRAWINGS

FIG. 1 illustrates a vehicular power-supply circuit in accordance with an embodiment of the invention;
FIG. 2 is a flowchart illustrating exemplary operations of a controlling circuit;
FIG. 3 illustrates an exemplary input voltage and output voltage of a booster circuit at the time of a bypass-current-detection mode; and
FIG. 4 illustrates a variation of a vehicular power-supply circuit in accordance with an embodiment of the invention.

### PREFERRED EMBODIMENTS

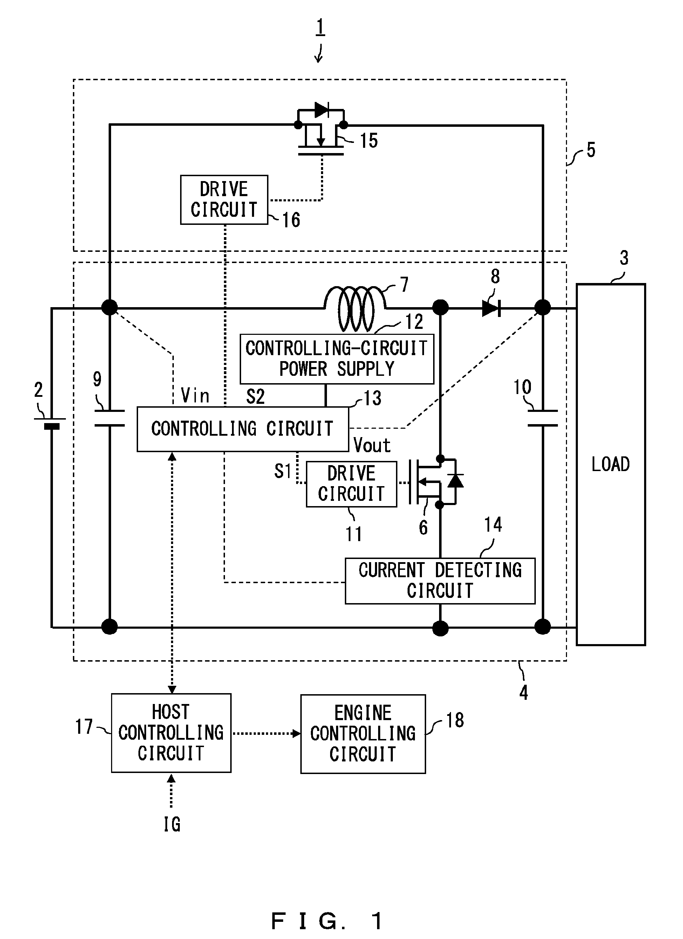

FIG. 1 illustrates a vehicular power-supply circuit in accordance with an embodiment of the invention.

A power-supply circuit 1 depicted in FIG. 1 maintains a constant voltage of a battery 2 equipped in an idle-stop vehicle and outputs the voltage to a load 3. The power-supply circuit 1 includes a booster circuit 4 and a bypass circuit 5.

At the time of restarting the engine subsequently to an idle stop, the booster circuit 4 boosts and outputs a voltage of the battery 2 to the load 3. The booster circuit 4 includes a boosting switching element 6, a coil 7, a rectifier diode 8, capacitors 9 and 10, a drive circuit 11, a controlling-circuit power supply 12, a controlling circuit 13, and a current detecting circuit 14.

The boosting switching element 6 is, for example, a MOSFET (Metal Oxide Semiconductor Field Effect Transistor) or an IGBT (Insulated Gate Bipolar Transistor).

The coil 7 is provided between the battery 2 and the boosting switching element 6.

The rectifier diode 8 is provided between the coil 7 and the load 3.

The capacitor 9 is provided in an input stage of the booster circuit 4, and the capacitor 10 is provided in an output stage of the booster circuit 4.

The drive circuit 11 drives the boosting switching element 6 using a control signal S1 output from the controlling circuit 13.

The controlling-circuit power supply 12 supplies driving power to the controlling circuit 13.

The current detecting circuit 14 detects a current flowing through the boosting switching element 6. The current detecting circuit 14 is, for example, a resistor serially connected to the boosting switching element 6. While the boosting switching element 6 is in an on state, the controlling circuit 13 divides a voltage applied to the resistor by the ohmic value of the resistor so as to determine a current flowing from the battery 2 via the coil 7 to the boosting switching element 6 and the current detecting circuit 14, i.e., resistors.

The bypass circuit 5 includes a bypass switch 15 and a drive circuit 16.

The bypass switch 15, e.g., a MOSFET, is connected in parallel to the booster circuit 4.

The drive circuit 16 drives the bypass switch 15 using a control signal S2 output from the controlling circuit 13.

The controlling circuit 13 outputs the control signals S1 and S2 in accordance with various reports sent from a host controlling circuit 17 that controls operations of the entirety of the idle-stop vehicle. The controlling circuit 13 is achieved by, for example, software or hardware. When the controlling circuit 13 is achieved by software, the controlling circuit 13 includes a CPU and a memory and is achieved via the CPU reading and executing a program stored in the memory. The controlling circuit 13 may be provided outside the booster circuit 4.

During an ordinary period other than the time of restarting the engine subsequently to an idling stop, the controlling circuit 13 outputs a control signal S2 that maintains the bypass switch 15 in the on state, and outputs a control signal S1 that maintains the boosting switching element 6 in the off state. Hence, the battery 2 and the load 3 are electrically connected by the bypass switch 15, and the booster circuit 4 does not perform a boosting operation for a voltage of the battery 2, thereby causing a current to flow from the battery 2 to the load 3 via the bypass circuit 5, not via the booster circuit 4. Accordingly, the voltage drop of the battery 2 caused by the bypass switch 15 may be made to be less than the voltage drop of the battery 2 caused by, for example, the coil 7 and the rectifier diode 8, thereby maintaining the supply of a necessary voltage to the load 3 during the ordinary period other than the time of restarting the engine subsequently to an idling stop. The operation control performed by the controlling circuit 13 in such a situation will hereinafter be referred to as a "bypass mode".

At the time of restarting the engine subsequently to an idling stop, the controlling circuit 13 outputs a control signal S2 that maintains the bypass switch 15 in the off state, and outputs a control signal S1 that repeatedly puts the boosting switching element 6 in the on state and the off state. This eliminates an electric connection between the battery 2 and the load 3 established by the bypass switch 15 and causes the booster circuit 4 to perform the boosting operation for the voltage of the battery 2, with the result that the voltage of the battery 2 is boosted and output to the load 3. That is, even when the voltage of the battery 2 is temporarily decreased due to the driving of a starter motor at the time of restarting the engine subsequently to an idling stop, the supply of a necessary current to the load 3 may be maintained. The operation control performed by the controlling circuit 13 in such a situation will hereinafter be referred to as a "voltage boosting mode".

During the "bypass mode", the controlling circuit 13 detects a bypass current flowing through the bypass switch 15 using a current detected by the current detecting circuit 14 at certain time intervals (e.g., every 5-10 seconds). The operation control performed by the controlling circuit 13 in such a situation will hereinafter be referred to as a "bypass-current detection mode".

The controlling circuit 13 determines whether the bypass current detected during the "bypass-current detection mode" is equal to or greater than a threshold. When it is determined that the bypass current is equal to or greater than the threshold, the controlling circuit 13 reports, to the host controlling circuit 17, an instruction to prohibit the restarting of the engine subsequent to an idle stop. Upon receipt of the instruction to prohibit the restarting of the engine subsequent to an idle stop, the host controlling circuit 17 reports that instruction to an engine controlling circuit 18 that controls an operation of the engine. Upon receipt of the instruction to prohibit the restarting of the engine subsequent to an idle stop, the engine controlling circuit 18 prohibits an operation for restarting the engine subsequently to an idle stop.

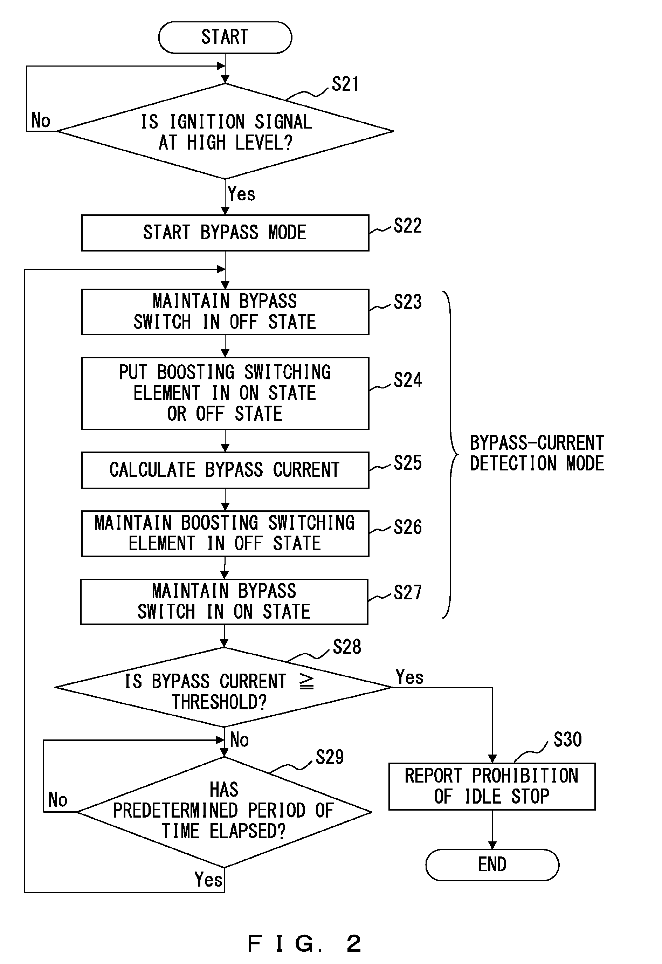

FIG. 2 is a flowchart illustrating exemplary operations of the controlling circuit 13. Assume that, during an initial state (e.g., while the vehicle is parked before the engine is started), the bypass switch 15 is maintained in the on state, and the boosting switching element 6 is maintained in the off state. Assume that, when the host controlling circuit 17 reports to the controlling circuit 13 an instruction to restart the engine subsequently to an idling stop, the controlling circuit 13 enters a process between the operation steps of S28 and S29 depicted in FIG. 2 and performs the "voltage boosting mode" until a predetermined period of time elapses. When the "voltage boosting mode" ends, the controlling circuit 13 returns to the operation step of S22. Assume that, when a user (e.g., a driver) operates an ignition switch to change an ignition signal (IG) from a low level to a high level, a starter motor for starting the engine of the idle-stop vehicle starts to be driven. Assume that the predetermined period of time is, for example, equal to or almost equal to a period during which the voltage of the battery 2 decreases due to the driving of the starter motor. When the host controlling circuit 17 reports to the controlling circuit 13 that the ignition signal has been changed from the high level to the low level, the controlling circuit 13 puts the bypass switch 15 and the boosting switching element 6 back in the initial state.

When the host controlling circuit 17 reports to the controlling circuit 13 that the ignition signal has been changed from the low level to the high level (Yes in S21), the controlling circuit 13 starts the "bypass mode" (S22). When the ignition signal changes from the low level to the high level, the controlling circuit 13 may be activated by power supplied from the controlling-circuit power supply 12 and may start the "bypass mode".

The controlling circuit 13 performs the "bypass-current detection mode" (S23-S27).

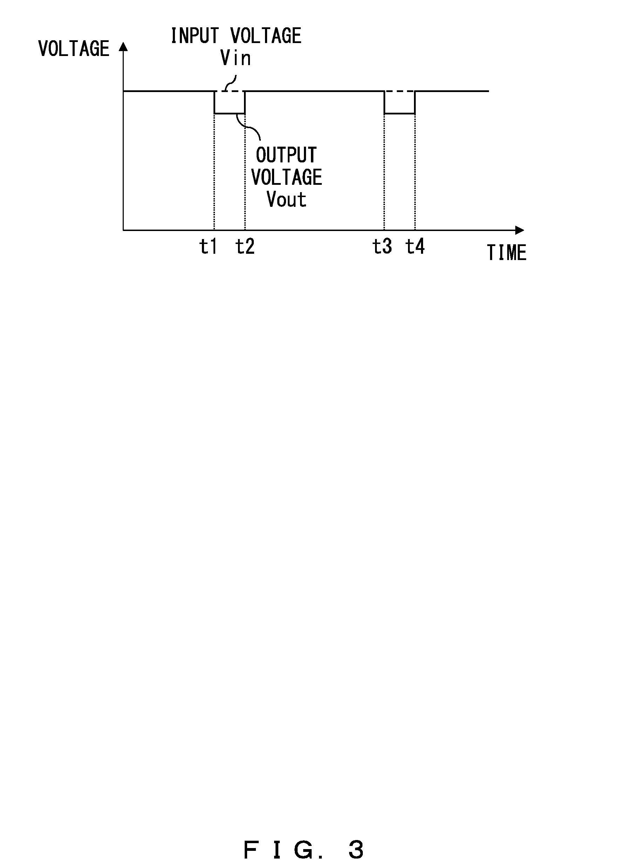

That is, at a timing t1 of the "bypass-current detection mode" depicted in FIG. 3, the bypass switch 15, which has been maintained in the on state, is switched and maintained in the off state by the controlling circuit 13. Hence, a current that has been flowing from the battery 2 to the load 3 via the bypass circuit 5 starts flowing from the battery 2 to the load 3 via the booster circuit 4. Accordingly, as depicted in FIG. 3, an output voltage Vout (solid line) of the booster circuit 4 is decreased by, for example, the coil 7 and the rectifier diode 8 during the period between timings t1 and t2.

At the timing t2 of the "bypass-current detection mode" depicted in FIG. 3, the controlling circuit 13 causes the booster circuit 4 to start a boosting operation. That is, during the period between timings t2 and t3 (e.g., several milliseconds to several tens of milliseconds), the controlling circuit 13 puts the boosting switching element 6 in the on state or off state in a manner such that the output voltage Vout of the booster circuit 4 becomes equal to an input voltage Vin of the booster circuit 4 achieved before or just before the timing t2. The input voltage Vin of the booster circuit 4 before or just before the timing t2 may be stored in a not-illustrated storage unit provided within or outside the controlling circuit 13. During the period between the timings t2 and t3, the controlling circuit 13 detects, as a bypass current (bypass current that was flowing from the battery 2 to the load 3 via the bypass switch 15 before or just before the bypass switch 15 was put in the off state), a current detected by the current detecting circuit 14. In the present embodiment, the input voltage Vin of the booster circuit 4 is boosted during the "bypass-current detection mode", and the voltage boosting corresponds to a decrease in voltage caused by, for example, the coil 7 and/or the rectifier diode 8. That is, the duty ratio of a driving signal for the boosting switching element 6 achieved during the "bypass-current detection mode" is small in comparison with the duty ratio of the driving signal for the boosting switching element 6 achieved during the "voltage boosting mode", and hence, even in the case of boosting, during the "bypass-current detection mode", the input voltage Vin of the booster circuit 4 while increased power is being supplied to the load 3, a large current does not flow through the output of the booster circuit 4.

At the timing t3 of the "bypass-current detection mode" depicted in FIG. 3, the controlling circuit 13 puts and maintains the boosting switching element 6 in the off state; at the timing t4 of the "bypass-current detection mode" depicted in FIG. 3, the controlling circuit 13 puts and maintains the bypass switch 15 in the on state.

The controlling circuit 13 determines whether the bypass current detected during the "bypass-current detection mode" is equal to or greater than a threshold (S28).

In a case where the bypass current is less than the threshold (No in S28), when a predetermined period of time (e.g., 5-10 seconds) has elapsed (Yes in S29), the controlling circuit 13 performs the "bypass-current detection mode" again (S23-S27).

Meanwhile, when the bypass current is equal to or greater than the threshold (Yes in S28), the controlling circuit 13 reports, to the host controlling circuit 17, an instruction to prohibit the restarting of the engine subsequent to an idle stop (S30). Upon receipt of the instruction to prohibit the restarting of the engine subsequent to an idle stop, the host controlling circuit 17 reports that instruction to the engine controlling circuit 18 that controls an operation of the engine. Upon receipt of the instruction to prohibit the restarting of the engine subsequent to an idle stop, the engine controlling circuit 18 prohibits an operation for restarting the engine subsequently to an idle stop.

Accordingly, while a large bypass current that is equal to or greater than a threshold is flowing through the output of the booster circuit 4 due to an increase in power supplied to the load 3, the booster circuit 4 is not operated in restarting the engine subsequently to an idle stop, and hence the booster circuit 4 does not stop due to, for example, an overcurrent protection function, with the result that an overcurrent can be prevented from flowing through the booster circuit 4 during a boosting operation. Hence, the load 3 may be an electronic device desirably supplied with a voltage that does not go beyond a specific range, e.g., an electronic device related to basic performance of a vehicle such as moving forward, turning, and stopping.

The power-supply circuit 1 in accordance with the embodiment allows the current detecting circuit 14 to be formed of cheap parts such as resistors, thereby suppressing an increase in cost. When the current detecting circuit 14 is also used as a current detecting circuit for detecting a current that flows through the booster circuit 4 during the "voltage boosting mode", a new current detecting circuit 14 does not need to be prepared, thereby further suppressing an increase in cost.

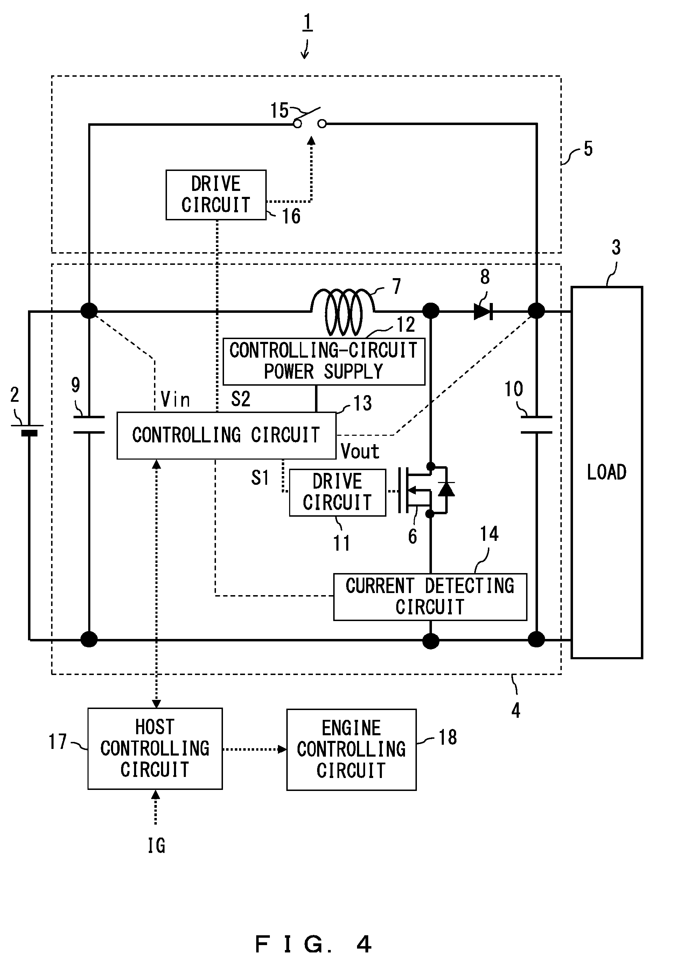

In the power-supply circuit 1 illustrated in FIG. 1, the bypass switch 15 is formed of a MOSFET, but, as in the power-supply circuit 1 illustrated in FIG. 4, the bypass switch 15 may be formed of, for example, a mechanical relay (electromagnetic relay).

The controlling circuit 13 may send a bypass current detected during the "bypass-current detection mode" directly to the host controlling circuit 17. In this case, when the bypass current sent from the controlling circuit 13 is equal to or greater than a threshold, the host controlling circuit 17 reports to the engine controlling circuit 18 an instruction to prohibit the restarting of the engine subsequent to an idling stop.

## Claims

1. A vehicular power-supply circuit comprising:
a booster circuit that includes a boosting switching element, a coil provided between a battery and the boosting switching element, and a current detecting circuit that detects a current flowing through the boosting switching element;
a bypass switch connected in parallel to the booster circuit; and
a controlling circuit that controls driving of the boosting switching element in such a manner as to maintain the bypass switch in an on state during an ordinary period other than a time of restarting an engine subsequently to an idle stop, and in such a manner as to, at the time of restarting the engine subsequently to the idle stop, maintain the bypass switch in an off state and boost and output a voltage of the battery to a load, wherein
the controlling circuit controls the driving of the boosting switching element in a manner such that, at a predetermined timing during the ordinary period, the bypass switch is put and maintained in the off state and then such that an output voltage of the booster circuit becomes equal to an input voltage of the booster circuit before the predetermined timing, and
while the controlling circuit is controlling the driving of the boosting switching element in a manner such that the output voltage of the booster circuit becomes equal to the input voltage of the booster circuit before the predetermined timing, the controlling circuit detects, as a bypass current flowing through the bypass switch, a current detected by the current detecting circuit.

2. The vehicular power-supply circuit according to claim 1, wherein
when the bypass current is equal to or greater than a threshold, the controlling circuit reports prohibition of the idle stop to an engine controlling circuit that controls an operation of the engine.
